# EUROPÄISCHE PATENTSCHRIFT

(11) **EP 0 896 484 B1**
(45) Veröffentlichungstag und Bekanntmachung des Hinweises auf die Patenterteilung: **14.03.2001**
(21) Anmeldenummer: 98113777.1
(22) Anmeldetag: 23.07.1998
(51) Int. Cl.: H04Q 7/22

(54) **Verfahren und Anordnung zur Verwendung eines Mobilfunktelefones und SMS-Vorrichtung für Fahrplaninformation und buchung**
Method and apparatus for using a mobile telephone and Short Message Service for trip planning information and booking
Méthode et appareil pour utiliser un téléphone mobile et service de messages courts pour informations d'initéraire de voyage et de réservation

(30) Priorität: 04.08.1997 DE 29713811 U; 04.08.1997 DE 19733507
(43) Veröffentlichungstag der Anmeldung: 10.02.1999
(73) Patentinhaber: Rabels, Peter, 22179 Hamburg (DE)
(72) Erfinder: Rabels, Peter, 22179 Hamburg (DE)
(74) Vertreter: Richter, Werdermann & Gerbaulet

(56) Entgegenhaltungen:
- WO-A-97/32439
- WO-A-97/41654
- HELLAKER J ET AL: "REAL-TIME TRAVELLER INFORMATION - IN EVERYONE'S POCKET? - A PILOT TEST USING HAND-PORTABLE GSM TERMINALS" PROCEEDINGS OF THE VEHICLE NAVIGATION AND INFORMATIONS SYSTEMS CONFERENCE, OTTAWA, OCT. 12 - 15, 1993, 12. Oktober 1993 (1993-10-12), Seiten 49-52, XP000448510 REEKIE H M
- Randall P A: "PROMISE-a PeRsOnal Mobile traveller and traffic Information SErvice"; IEE Colloquium on Commercialising the Internet (Digest No.1997/063), London, UK, 10 Feb. 1997 XP002113167

## Beschreibung

Die Erfindung betrifft ein Verfahren zum Abruf von Fahrplaninformationen zwischen zwei Orten mittels eines Mobilfunktelefons sowie eine Telekommunikationsanordnung hierfür gemäß den Oberbegriffen der Ansprüche 1 und 15.

Hauptinformationsquelle eines Reisenden, beispielsweise eines Fluggastes, über die von einer Fluggesellschaft angebotenen Flüge bildet der sog. "Flugplan". Dieser Flugplan wird dreimal jährlich in gedruckter Form in einer Auflage von mehreren Millionen Stück veröffentlicht. Regelmäßig enthalten diese Flugpläne nicht korrigierbare Druckfehler zum Ärger der Kunden und der Fluggesellschaft. Es ist ein erheblicher Nachteil dieser gedruckten Flugpläne, daß eine kurzfristige Aktualisierung nicht möglich ist. Ferner ist es von Nachteil, daß die Reservierung eines Fluges personalaufwendig telefonisch über ein Reisebüro oder über die Fluggesellschaft direkt erfolgt.

Ein Verbesserungsvorstoß hierbei ist die Reservierung eines Fluges mittels Notebook und CD-ROM. Dies wird aber kaum genutzt, da es viel zu teuer und umständlich ist.

Die zunehmende Ausweitung des Mobiltelefonnetzes und eine entsprechend steigende Zahl an Nutzern von Mobiltelefonen mit der Möglichkeit zur Nutzung eines Short-Message-Service, kurz SMS genannt, läßt den Wunsch nach weiterem Komfort und Einsatzmöglichkeiten dieses Systems aufkommen.

Durch die HELLAKER J ET AL: "REAL-TIME TRAVELLER INFORMATION - IN EVERYONE'S POCKET? - A PILOT TEST USING HAND-PORTABLE GSM TERMINALS" PROCEEDINGS OF THE VEHICLE NAVIGATION AND INFORMATIONS SYSTEMS CONFERENCE, OTTAWA, OCT. 12-15, 1993, 12. Oktober 1993 (1993-10-12), Seiten 49-52 ist ein Verfahren zur Verwendung eines Mobilfunktelefons mit einer vom Mobiltelefon entfernten Vorrichtung für Short-Message-Service für Fahrplaninformationen bekannt. Es wird jedoch hierbei nicht explizit festgelegt, daß die Fahrplaninformation in Form eines Koordinatensatzes, bestehend aus zwei Ortskoordinaten und einer Zeitkoordinate, am Mobiltelefon eingegeben und in der Basiseinheit mit entsprechenden gespeicherten Koordinatensätzen vergleichen wird, d.h. es sind dem bekannten Verfahren keine detaillierten Informationen über die Form der Abfrage zu entnehmen.

Der SMS-Service bei einer Mobiltelefonverbindung ist wegen der (derzeit) vergleichsweise geringen Datenübertragungsrate, der relativ umständlichen Eingabe von alphanumerischer Information über die mehrfach belegte numerische Tastatur des Mobiltelefons und der großen zeitlichen Verzögerung bei der SMS-Übertragung nur mit Einschränkung für einen Datenaustausch einsetzbar.

Um eine Fahrplaninformation, die aus Abfahrts- und Ankunftsort und Abfahrts- und/oder Ankunftszeit und ggf. Fahrtdauer besteht, abzufragen, kann unter diesen Umständen unterschiedlich vorgegangen werden: Eine Möglichkeit besteht darin, in einem Wechselspiel zwischen Mobilstation und Basisstation die Information in einer Abfolge von Fragen und Antworten sukzessive festzulegen. An der Mobilstation wird beispielsweise zunächst der Wunsch nach einer Fahrplaninformation angemeldet. Die Basisstation fragt dann nach dem gewünschten Abfahrtsort. Ist dieser an die Basisstation übertragen, wird weiter nach dem gewünschten Zielort gefragt. Ist dieser an die Basisstation übertragen, wird nach dem gewünschten Datum gefragt. Liegt das Datum fest, wird nach der gewünschten Abfahrtszeit gefragt, usw.. Dies kann auch nach einem Muliple-Choice-Prinzip erfolgen. Mit einer solchen Abfolge von Informationsübermittlungen wird zwar eine vereinfachte Eingabe erreicht, jedoch wird durch das Wechselspiel der Übertragungspfad erheblich belastet.

Es ist daher Aufgabe der vorliegenden Erfindung, ein Verfahren und eine Telekommunikationsanordnung der eingangs genannten Art zur Verfügung zu stellen, welche die obengenannten Nachteile beseitigt und den Nutzen des Mobilfunknetzes weiter vergrößert.

Diese Aufgabe wird durch ein Verfahren der o.g. Art mit den in Anspruch 1 angegebenen Verfahrensschritten und durch eine Telekommunikationsanordnung mit den in Anspruch 15 gekennzeichneten Merkmalen gelöst.

Dazu sind erfindungsgemäß folgende Verfahrensschritte vorgesehen:
(a) Aufnehmen eines ersten Koordinatensatzes aus zwei Ortskoordinaten und einer Zeitkoordinate am Mobiltelefon,
(b) Übertragen dieses ersten Koordinatensatzes vom Mobiltelefon an die SMS-Vorrichtung,
(c) Vergleichen des ersten Koordinatensatzes mit in einem Speichermittel gespeicherten Koordinatensätze für Transportverbindungen zwischen zwei Ortskoordinaten,
(c) Feststellen von gespeicherten Koordinatensätzen, welche in den Ortskoordinaten und wenigstens teilweise in der Zeitkoordinate mit dem übertragenen ersten Koordinatensatz übereinstimmen, und
(e) Übertragen der festgestellten gespeicherten Koordinatensätze an das Mobiltelefon.

Dies hat den Vorteil, daß der Nutzer des Mobilfunktelefones über SMS jeweils aktualisierte Verbindungsinformationen zu seinem gewünschten Reisetermin und Reiseweg erhält.

Vorzugsweise Weitergestaltungen des Verfahrens sind in den Ansprüchen 2 bis 14 beschrieben.

Zweckmäßigerweise sind die Transportverbindungen Passagierflugverbindungen, die im Speichermittel gespeicherten Koordinatensätze Flugverbindungen zwischen jeweils zwei Städten und die Ortskoordinaten im Flugverkehr übliche Städteabkürzungen. Dadurch ist das erfindungsgemäße Verfahren für einen Fluggast verwendbar.

Die Zeitkoordinate des ersten Koordinatensatzes ist vorzugsweise ein gewünschter Reisetag und enthält in vorteilhafter Weise zusätzlich eine Uhrzeit oder ein Zeitintervall. Dies erlaubt eine Zuordnung zu den im Speichermittel gespeicherten Koordinatensätze, die bevorzugt eine Zeitkoordinate beinhalten, welche Kalendertag und Uhrzeit umfaßt. Hierzu besteht in Schritt (d) die wenigstens teilweise Übereinstimmung der Zeitkoordinaten darin, daß zumindest das Kalenderdatum und/oder die Uhrzeit übereinstimmt, oder daß alle in ein Zeitintervall des ersten Koordinatensatzes fallende Koordinatensätze im Speichermittel festgestellt werden. Dies gibt dem Nutzer des Mobilfunktelefones die Möglichkeit aus mehreren möglichen Verbindungen die für ihn beste auszuwählen.

Für eine endgültige Buchung erfolgt in einem weiteren Schritt eine Rückübertragung wenigstens eines zweiten vorbestimmten Koordinatensatzes aus Ortskoordinaten und Zeitkoordinate von dem Mobilfunktelefon an die SMS-Vorrichtung und eine Übertragung dieses zweiten Koordinatensatzes an einen Buchungscomputer eines Transportunternehmens, wie beispielsweise einer Fluggesellschaft oder ein Busunternehmen.

Entsprechende Zahlungs- oder Kundeninformationen können dem rückübertragenen Koordinatensatz in vorteilhafter Weise entsprechend angefügt werden, wie beispielsweise Kundennummer, Bankverbindung und/ oder Kreditkarteninformationen.

Durch Übertragen einer Buchungsbestätigung vom Buchungscomputer über die SMS-Vorrichtung an das Mobiltelefon, falls der rückübertragene zweite Koordinatensatz als Buchung akzeptiert wird, oder Übertragen von alternativen dritten Koordinatensätzen vom Buchungscomputer über die SMS-Vorrichtung an das Mobiltelefon, falls der rückübertragene zweite Koordinatensatz als Buchung nicht akzeptiert wird, erhält der Reisende alle für ihn wichtigen weiteren Informationen.

Zusätzlich kann in einem weiteren Schritt eine Übertragung von Abweichungen der Zeitkoordinate im als Buchung akzeptierten Koordinatensatz von der tatsächlichen Zeitkoordinate der Transportverbindung, beispielsweise bei Verspätungen oder Verschiebungen erfolgen, so daß sich der Reisende rechtzeitig auf geänderte Reisezeiten einstellen kann.

Die Telekommunikationsanordnung zur Durchführung des voranstehend beschriebenen Verfahrens umfaßt ein Mobiltelefon und eine Vorrichtung für Short-Message-Service (SMS-Vorrichtung), wobei die SMS-Vorrichtung mit einem Mobilfunk-Netzknoten und mit einem Speichermittel für Transportverbindungen zwischen zwei Ortskoordinaten, sowie mit einem Buchungscomputer eines Transportunternehmens zu einer Einheit verbunden ist, wobei die Transportverbindungen im Speichermittel als Koordinatensätze mit zwei Ortskoordinaten und einer Zeitkoordinate gespeichert sind.

Die Telekommunikationsanordnung besteht hiernach darin, daß die SMS-Vorrichtung einen Mobilfunk- Netzknoten aufweist und mit einem Speichermittel für Transportverbindungen zwischen zwei Ortskoordinaten sowie mit einem Buchungscomputer eines Transportunternehmens zu einer Einheit verbunden ist.

Dies hat den Vorteil, daß das SMS-System direkt zum Buchen von beispielsweise Flugverbindungen mit aktuellsten Flugplänen verwendet werden kann.

Vorzugsweise Weitergestaltungen der Anordnung sind in den Unteransprüchen beschrieben.

Zweckmäßigerweise sind die Transportverbindungen im Speichermittel als Koordinatensätze mit zwei Ortskoordinaten und einer Zeitkoordinate gespeichert und die Transportverbindungen sind bevorzugt Flugverbindungen.

Weitere nützliche Informationen im gespeicherten Koordinatensatz, wie beispielsweise über den Typ des Transportmittels oder eine Bestuhlung im Transportmittel oder eine Routenangabe der Transportverbindung, erhöhen den Komfort und befriedigen den steigenden Informationswunsch des Kunden.

Nachstehend wird die Erfindung anhand der beigefügten Zeichnungen näher erläutert. Diese zeigen in
- Fig.1: eine schematische Darstellung der Telekommunikationsanordnung mit einer erfindungsgemäßen SMS-Vorrichtung und
- Fig. 2: ein Blockschaltbild für die Handhabung der Telekommunikationsanordnung.

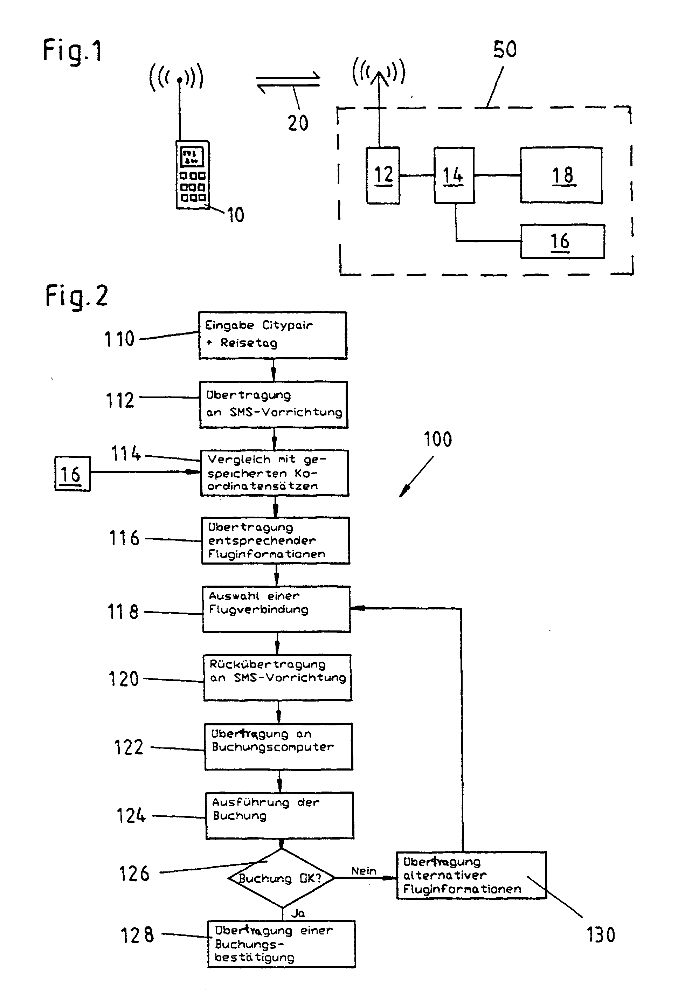

Die in Fig. 1 schematisch dargestellte Telekommunikationsanordnung bzw. das in dieser Figur dargestellte Mobilfunknetz umfaßt ein Mobilfunktelefon 10, die über eine Funkstrecke bzw. Funkverbindung 20 mit einem Mobilfunk- Netzknoten 12 verbunden sind. Der Mobilfunk- Netzknoten 12 ist mit einer Vorrichtung für einen Short-Message-Service, nachfolgend kurz SMS-Vorrichtung genannt, verbunden. Die SMS-Vorrichtung 14 ist mit einem Speichermittel 16 verbunden, welches Datensätze über verschiedene Transportverbindungen, beispielsweise Flugverbindungen, enthält. Ferner ist ein Buchungskomputer 18 eines Transportunternehmens, beispielsweise einer Fluggesellschaft, mit der SMS-Vorrichtung 14 verbunden. Alternativ kann der Datenspeicher 16 auch in den Buchungscomputer 18 integriert oder an diesen angeschlossen oder in die SMS-Vorrichtung selbst integriert sein. Die Bauteile 12, 14, 16 und 18 sind zu einer Einheit 50 zusammengefaßt.

Unter Bezugnahme auf das Flussdiagramm 100 von Fig. 2 wird nachfolgend das Verfahren beispielhaft in Verbindung mit einer Fluginformation bzw. Flugbuchung erläutert.

Mittels des Mobiltelefones 10 wird in Schritt 110 ein Drei-Letter-Code, beispielsweise MUC für München, des gewünschten Abflug- und Ankunftsflughafens als sogn. Citypair sowie der gewünschte Reisetag über eine entsprechende Rufnummer an die Fluggesellschaft mit Hilfe des sog. SMS-Verfahrens (Short-Message-Service) in Schritt 112 übermittelt. Die Fluggesellschaft vergleicht in Schritt 114 die übertragenen Daten mit in dem Speicher 16 gespeicherten Daten und beantwortet diese SMS-Anfrage in Schritt 116 durch Übermittlung aller aktualisierter Flüge, die an dem gewünschten Tag für die gewünschte Städteverbindung angeboten werden, nebst weiterer Informationen zum Flug, wie beispielsweise Flugzeugtyp, Bestuhlung, Anzahl freier Plätze oder ähnliches.

Der Kunde wählt in Schritt 118 einen bestimmten Flug aus, fügt beispielsweise Bankverbindung und ggf. weitere persönlicher Details dazu und bucht den Flug durch Rückübertragung dieser Daten in Schritt 120. Diese Buchung wird in Schritt 122 von der SMS-Vorrichtung an den Buchungscomputer 18 der Fluggesellschaft übertragen, welche in Schritt 124 prüft, ob die Buchung ausgeführt werden kann. Falls ja, wird in Schritt 128 die Buchung über SMS bestätigt. Sonst wird in Schritt 130 über SMS mit einer Alternative geantwortet, wenn die Buchung des gewünschten Fluges nicht möglich ist. Bei Schritt 118 hat der Nutzer des Mobiltelefones immer die Möglichkeit auszuwählen oder den Vorgang abzubrechen.

Am Reisetag selbst kann sich der Fluggast zu seiner persönlichen Disposition über dieses System Informationen beschaffen, ob sein Flug pünktlich oder verspätet ist etc.

Danach ergeben sich folgende Schritte für Handhabung der Telekommunikationsanordnung:
(a) Aufnehmen eines ersten Koordinatensatzes aus zwei Ortskoordinaten und einer Zeitkoordinate am Mobiltelefon,
(b) Übertragen dieses ersten Koordinatensatzes vom Mobiltelefon an die SMS-Vorrichtung,
(c) Vergleichen des ersten Koordinatensatzes mit in einem Speichermittel gespeicherten Koordinatensätze für Transportverbindungen zwischen zwei Ortskoordinaten,
(d) Feststellen von gespeicherten Koordinatensätzen, welche in den Ortskoordinaten und wenigstens teilweise in der Zeitkoordinate mit dem übertragenen ersten Koordinatensatz übereinstimmen, und
(e) Übertragen der festgestellten gespeicherten Koordinatensätze an das Mobiltelefon.

Der Kunde bzw. Nutzer des Mobiltelefones erhält über SMS den jeweils aktualisierten Flugplan zu einem bestimmten Citypair, einschließlich weiterer wichtiger Informationen zu den einzelnen Flügen. Die Buchung eines gewünschten Fluges ist einfach, schnell und komfortabel und die Luftverkehrsgesellschaft erspart sich den Druck der Flugpläne, da die Information der Fluggäste über SMS billiger, schneller und immer aktuell erfolgt.

Diese aktuellen Informationen und die Buchungsmöglichkeiten stehen dem Kunden jederzeit weltweit zur Verfügung. Alleinige Voraussetzung dazu ist das Vorhandensein eines entsprechenden Mobiltelefones 10 mit SMS-Unterstützung. Ferner müssen die Fluggesellschaften lediglich einen entsprechenden SMS-Service vorhalten. Das vorgehaltene Personal in den Reisebüros und in den Reservierungsabteilungen der Fluggesellschaften kann reduziert werden, da bei einer entsprechenden Verbreitung dieses Systems die Auskunftserteilung und die Routinebuchung eines Fluges weitgehend automatisch erfolgt. Zum Nutzen der Kunden und der Fluggesellschaft kann sich das Reservierungspersonal intensiver um Sonderfälle und Sonderwünsche der Fluggäste kümmern.

Die Darstellung in Bezug auf Flugverbindungen ist nur beispielhaft gewählt. Selbstverständlich ist das erfindungsgemäße Verfahren auf alle Transportverbindungen anwendbar, so z.B. Bus-, Schiff- oder Bahnverbindungen. Auch ist die Erfindung nicht auf den Passagierverkehr beschränkt. Vielmehr können auch Frachtstücke auf entsprechend terminierte Transportverbindungen zu Wasser, zu Lande oder in der Luft gebucht werden.

## Patentansprüche

1. Verfahren zum Abruf von Fahrplaninformationen über Transportverbindungen zwischen zwei Orten mittels eines Mobiltelefones (10), welches mit einer vom Mobiltelefon (10) entfernten Vorrichtung (14) für Short-Message-Service (SMS-Vorrichtung) verbunden ist, mit folgenden Schritten,
(a) Aufnehmen eines ersten Koordinatensatzes aus zwei Ortskoordinaten und einer Zeitkoordinate am Mobiltelefon (10),
(b) Übertragen dieses ersten Koordinatensatzes vom Mobiltelefon (10) an die SMS-Vorrichtung (14),
(c) Vergleichen des ersten Koordinatensatzes mit in einem Speichermittel (16) gespeicherten Koordinatensätzen für Transportverbindungen zwischen zwei Ortskoordinaten,
(d) Feststellen von gespeicherten Koordinatensätzen, welche in den Ortskoordinaten und wenigstens teilweise in der Zeitkoordinate mit dem übertragenen ersten Koordinatensatz übereinstimmen, und
(e) Übertragen der festgestellten gespeicherten Koordinatensätze an das Mobiltelefon (10).

2. Verfahren nach Anspruch 1,
dadurch gekennzeichnet,
daß die im Speichermittel (16) gespeicherten Koordinatensätze Flugverbindungen zwischen jeweils zwei Städten sind.

3. Verfahren nach Anspruch 1 oder 2,
dadurch gekennzeichnet,
daß die Ortskoordinaten im Flugverkehr übliche Städteabkürzungen sind.

4. Verfahren nach einem der vorhergehenden Ansprüche,
dadurch gekennzeichnet,
daß die Zeitkoordinate des ersten Koordinatensatzes ein gewünschter Reisetag ist.

5. Verfahren nach einem der vorhergehenden Ansprüche,
dadurch gekennzeichnet,
daß die Zeitkoordinate des ersten Koordinatensatzes zusätzlich eine Uhrzeit oder ein Zeitintervall enthält.

6. Verfahren nach einem der vorhergehenden Ansprüche,
dadurch gekennzeichnet,
daß die im Speichermittel (16) gespeicherten Koordinatensätze eine Zeitkoordinate beinhalten, welche Kalendertag und Uhrzeit umfaßt.

7. Verfahren nach einem der vorhergehenden Ansprüche,
dadurch gekennzeichnet,
daß die Transportverbindungen Passagierflugverbindungen sind.

8. Verfahren nach einem der vorhergehenden Ansprüche,
dadurch gekennzeichnet,
daß in Schritt (d) die wenigstens teilweise Übereinstimmung der Zeitkoordinaten darin besteht, daß zumindest das Kalenderdatum und/oder die Uhrzeit übereinstimmt.

9. Verfahren nach einem der vorhergehenden Ansprüche,
dadurch gekennzeichnet,
daß in Schritt (d) die wenigstens teilweise Übereinstimmung der Zeitkoordinaten darin besteht, daß alle in ein Zeitintervall des ersten Koordinatensatzes fallenden gespeicherten Koordinatensätze im Speichermittel (16) festgestellt werden.

10. Verfahren nach einem der vorhergehenden Ansprüche,
gekennzeichnet durch folgenden weiteren Schritt,
Rückübertragen wenigstens eines zweiten vorbestimmten Koordinatensatzes aus Ortskoordinaten und Zeitkoordinate von dem Mobiltelefon (10) an die SMS-Vorrichtung (14) und Übertragen dieses zweiten Koordinatensatzes an einen Buchungscomputer (18) eines Transportunternehmens.

11. Verfahren nach Anspruch 10,
dadurch gekennzeichnet,
daß das Transportunternehmen eine Fluggesellschaft oder ein Busunternehmen ist.

12. Verfahren nach Anspruch 10 oder 11,
dadurch gekennzeichnet,
daß dem rückübertragenen zweiten Koordinatensatz weitere Daten angefügt werden, wie beispielsweise Kundennummer, Bankverbindung und/oder Kreditkarteninformationen.

13. Verfahren nach einem der Ansprüche 10 bis 12,
gekennzeichnet durch folgenden weiteren Schritt,
Übertragen einer Buchungsbestätigung vom Buchungscomputer (18) über die SMS-Vorrichtung (14) an das Mobiltelefon (10), falls der rückübertragene zweite Koordinatensatz als Buchung akzeptiert wird, oder Übertragen von alternativen dritten Koordinatensätzen vom Buchungscomputer (18) über die SMS-Vorrichtung (14) an das Mobiltelefon (10), falls der rückübertragene zweite Koordinatensatz als Buchung nicht akzeptiert wird.

14. Verfahren nach Anspruch 13,
gekennzeichnet durch folgenden weiteren Schritt,
Übertragen von Abweichungen der Zeitkoordinate im als Buchung akzeptierten Koordinatensatz von der tatsächlichen Zeitkoordinate der Transportverbindung.

15. Telekommunikationsanordnung zur Durchführung des Verfahrens nach einem der Ansprüche 1 bis 14, umfassend ein Mobiltelefon (10) und eine Vorrichtung (14) für Short-Message-Service (SMS-Vorrichtung), wobei die SMS-Vorrichtung (14) mit einem Mobilfunk-Netzknoten (12) und mit einem Speichermittel (16) für Transportverbindungen zwischen zwei Ortskoordinaten, sowie mit einem Buchungscomputer (18) eines Transportunternehmens zu einer Einheit (50) verbunden ist,
dadurch gekennzeichnet,
daß die Transportverbindungen im Speichermittel (16) als Koordinatensätze mit zwei Ortskoordinaten und einer Zeitkoordinate gespeichert sind.

16. Telekommunikationsanordnung nach Anspruch 15,
dadurch gekennzeichnet,
daß das Speichermittel (16) in der SMS-Vorrichtung (14) selbst integriert ist.

17. Telekommunikationsanordnung nach einem der Ansprüche 15 und 16,
dadurch gekennzeichnet,
daß die gespeicherten Koordinatensätze zusätzliche Informationen wie beispielsweise über den Typ des Transportmittels oder eine Bestuhlung im Transportmittel oder eine Routenangabe der Transportverbindung umfaßt.

18. Telekommunikationsanordnung nach Anspruch 17,
dadurch gekennzeichnet,
daß das Transportmittel ein Flugzeug ist.

19. Telekommunikationsanordnung nach Anspruch 18,
dadurch gekennzeichnet,
daß die Transportverbindungen Flugverbindungen sind.

## Claims

1. A method for calling off timetable information on transport connections between two locations by means of a mobile telephone (10) which is connected with a device (14) for short message service (SMS device) remote from the mobile telephone, with the following steps :
(a) Recording of a first set of coordinates of two location coordinates and a time coordinate on the mobile telephone (10),
(b) Transmission of this first set of coordinates from the mobile telephone (10) to the SMS device (14),
(c) Comparison of the first set of coordinates with sets of coordinates stored in a storing means (16) for transport connections between two location coordinates,
(d) Determination of stored sets of coordinates which coincide in the location coordinates and at least partially in the time coordinate with the first transmitted set of coordinates and
(e) Transmission of the determined stored set of coordinates to the mobile telephone (10).

2. A method according to claim 1,
characterized in
that the sets of coordinates stored in the storing means (16) are flight connections between respectively two towns.

3. A method according to claim 1 or 2,
characterized in
that the location coordinates are town abbreviations which are usual for air traffic.

4. A method according to any of the preceding claims,
characterized in
that the time coordinate of the first set of coordinates is a wished day of travel.

5. A method according to any of the preceding claims,
characterized in
that the time coordinate of the first set of coordinates additionally contains a time or a time interval.

6. A method according to any of the preceding claims,
characterized in
that the sets of coordinates stored in the storing means (16) contain a time coordinate which comprises the calendar day and the time.

7. A method according to any of the preceding claims,
characterized in
that the transport connections are passenger flight connections.

8. A method according to any of the preceding claims,
characterized in
that in step (d) the at least partial coincidence of the time coordinates consists in the fact that at least the calendar day and/or the time coincides.

9. A method according to any of the preceding claims,
characterized in
that in step (d) the at least partial coincidence of the time coordinates consists in the fact that all the sets of coordinates stored falling into a time intervall of the first set of coordinates are determined in the storing means (16).

10. A method according to any of the preceding claims,
characterized by the following further step :
Retransmission of at least one second predetermined set of coordinates of location coordinates and time coordinate from the mobile telephone (10) to the SMS device (14) and transmission of this second set of coordinates to a reservation computer (18) of a transport operator.

11. A method according to claim 10,
characterized in
that the transport operator is a flying company or a bus operator.

12. A method according to claim 10 or 11,
characterized in
that further data such as, for example, the number of client, the bank connection and/or credit card information are added to the retransmitted second set of coordinates.

13. A method according to one of the claims 10 to 12,
characterized by the following further step :
Transmission of a reservation confirmation from the reservation computer (18) over the SMS device (14) to the mobile telephone (10) in case the retransmitted second set of coordinates is accepted as a reservation or transmission of an alternative third set of coordinates from the reservation computer (18) over the SMS device (14) to the mobile telephone (10) in case the retransmitted second set of coordinates is not accepted as a reservation.

14. A method according to claim 13,
characterized by the following further step :
Transmission of differences of the time coordinate in the set of coordinates accepted as a reservation from the effective time coordinate of the transport connection.

15. A telecommunication device for carrying out the method according to any of the claims 1 to 14, comprising a mobile telephone (10) and a device (14) for short message service (SMS device), whereby the SMS device (14) is connected with a mobile radiotelephone network nodal point (12) and with a storing means (16) for transport connections between two location coordinates as well as with a reservation computer (18) of a transport service to an unit (50),
characterized in
that the transport connections are stored in the storing means (16) as sets of coordinates with two location coordinates and with a time coordinate.

16. A telecommunication device according to claim 15,
characterized in
that the storing means (16) is integrated into the SMS device (14) itself.

17. A telecommunication device according to one of the claims 15 and 16,
characterized in
that the stored sets of coordinates comprise additional information such as for example on the type of the transport means or the seats in the transport means or a route indication of the transport connection.

18. A telecommunication device according to claim 17,
characterized in
that the transport means is an airplane.

19. A telecommunication device according to claim 18,
characterized in
that the transport connections are flight connections.

## Revendications

1. Méthode pour interroger des informations d'itinéraires concernant des liaisons de transport entre deux endroits au moyen d'un téléphone mobile (10) qui est relié à un dispositif (14) de service de messages courts (dispositif de SMS) éloigné du téléphone mobile (10), avec les étapes suivantes :
(a) Enregistrement d'un premier jeu de coordonnées constitué par deux coordonnées de lieu et une coordonnée de temps sur le téléphone mobile (10),
(b) Transmission de ce premier jeu de coordonnées du téléphone mobile (10) au dispositif de SMS (14),
(c) Comparaison du premier jeu de coordonnées avec des jeux de coordonnées mémorisés dans un moyen de mémorisation (16) pour des liaisons de transport entre deux coordonnées de lieu,
(d) Constatation de jeux de coordonnées mémorisés qui coïncident pour ce qui est des coordonnées de lieu et au moins en partie de la coordonnée de temps avec le premier jeu de coordonnées transmis et
(e) Transmission des jeux de coordonnées mémorisés constatés au téléphone mobile (10).

2. Méthode selon la revendication 1,
caractérisée en ce
que les jeux de coordonnées mémorisés dans le moyen de mémorisation (16) sont des liaisons par avion entre deux villes respectives.

3. Méthode selon la revendication 1 ou 2,
caractérisée en ce
que les coordonnées de lieu sont des abréviations de villes usuelles pour le trafic aérien.

4. Méthode selon l'une des revendications précédentes,
caractérisée en ce
que la coordonnée de temps du premier jeu de coordonnées est un jour de voyage souhaité.

5. Méthode selon l'une des revendications précédentes,
caractérisée en ce
que la coordonnée de temps du premier jeu de coordonnées contient en plus une heure ou un intervalle de temps.

6. Méthode selon l'une des revendications précédentes,
caractérisée en ce
que les jeux de coordonnées mémorisés dans le moyen de memorisation (16) contiennent une coordonnée de temps qui comprend le jour du calendrier et l'heure.

7. Méthode selon l'une des revendications précédentes,
caractérisée en ce
que les liaisons de transport sont des liaisons aériennes pour passagers.

8. Méthode selon l'une des revendications précédentes,
caractérisée en ce
que dans l'étape (d) la coïncidence au moins partielle des coordonnées de temps consiste en ce qu'au moins la date du calendrier et/ou l'heure coïncide.

9. Méthode selon l'une des revendications précédentes,
caractérisée en ce
que dans l'étape (d) la coïncidence au moins partielle des coordonnées de temps consiste en ce que tous les jeux de coordonnées mémorisés tombant dans un intervalle de temps du premier jeu de coordonnées sont constatés dans le moyen de mémorisation (16).

10. Méthode selon l'une des revendications précédentes,
caractérisée par l'étape supplémentaire suivante :
Retransmission d'au moins un second jeu de coordonnées prédéterminé constitué par des coordonnées de lieu et une coordonnée de temps du téléphone mobile (10) au dispositif de SMS (14) et transmission de ce second jeu de coordonnées à un ordinateur de réservation (18) d'une entreprise de transport.

11. Méthode selon la revendication 10,
caractérisée en ce
que l'entreprise de transport est une compagnie aérienne ou un service d'autocars.

12. Méthode selon la revendication 10 ou 11,
caractérisée en ce
que d'autres données sont ajoutées au second jeu de coordonnées retransmis comme, par exemple, le numéro de client, les coordonnées bancaires et/ou l'information de carte de crédit.

13. Méthode selon l'une des revendications 10 à 12,
caractérisée par l'étape supplémentaire suivante :
Transmission d'une confirmation de réservation de l'ordinateur de réservation (18) par l'intermédiaire du dispositif de SMS (14) au téléphone mobile (10), au cas où le second jeu de coordonnées retransmis est accepté comme réservation ou transmission d'un troisième jeu de coordonnées alternatif de l'ordinateur de réservation (18) par l'intermédiaire du dispositif de SMS (14) au téléphone mobile (10) au cas où le second jeu de coordonnées retransmis n'est pas accepté comme réservation.

14. Méthode selon la revendication 13,
caractérisée par l'étape supplémentaire suivante :
Transmission de différences de la coordonnée de temps dans le jeu de coordonnées accepté comme réservation par rapport à la coordonnée de temps effective de la liaison de transport.

15. Dispositif de télécommunication pour exécuter la méthode selon l'une des revendications 1 à 14 comprenant un téléphone mobile (10) et un dispositif (14) pour service de messages courts (dispositif de SMS), le dispositif de SMS (14) étant relié à un noeud de réseau de radiotéléphonie (12) et avec un moyen de mémorisation (16) pour des liaisons de transport entre deux coordonnées de lieu ainsi qu'avec un ordinateur de réservation (18) d'une entreprise de transport en une unité (50),
caractérisé en ce
que les liaisons de transport sont mémorisées dans le moyen de mémorisation (16) comme jeux de coordonnées avec deux coordonnées de lieu et une coordonnée de temps.

16. Dispositif de télécommunication selon la revendication 15,
caractérisé en ce
que le moyen de mémorisation (16) est intégré dans le dispositif de SMS (14) lui-même.

17. Dispositif de télécommunication selon l'une des revendications 15 et 16,
caractérisé en ce
que les jeux de coordonnées mémorisés contiennent des informations supplémentaires comme par exemple sur le type du moyen de transport ou les sièges dans le moyen de transport ou une indication d'itinéraire de la liaison de transport.

18. Dispositif de télécommunication selon la revendication 17,
caractérisé en ce
que le moyen de transport est un avion.

19. Dispositif de télécommunication selon la revendication 18,
caractérisé en ce
que les liaisons de transport sont des liaisons aériennes.
